# EUROPEAN PATENT APPLICATION

(11) **EP 2 660 507 A1**
(43) Date of publication of application: **06.11.2013**
(21) Application number: 12165284.6
(22) Date of filing: 24.04.2012
(51) Int. Cl.: F21V 8/00, F21K 99/00, G02B 6/00, F21Y 101/02

(54) **LED light bulb**

(71) Applicant: Sumitronics Taiwan Co., Ltd., Hsinchu City 300 (TW)
(72) Inventor: Udatsu, Shin, 30069 Hsinchu City (TW); Peng, Shih-Feng, 30069 Hsinchu City (TW)
(74) Representative: Viering, Jentschura & Partner

(57) **Abstract**

The instant disclosure relates to an LED light bulb, which includes a cap (1), a glass bulb (2), an LED module (4), an optical element (6), and a power supply module (5). The glass bulb (2) is disposed on one end of the cap (1) to cooperatively define an accommodating space (23). The LED module (4), used for emitting a first light (L1) having a first bandwidth, is received inside the accommodating space (23). To guide the first light (L1), the optical element (6) is received inside the accommodating space (23) and located at a light path of the LED module (4). The optical element (6) has a light guiding portion (61) and a wavelength transformation portion (62) used for changing the bandwidth of the emitted light from the LED module (4). The light guiding portion (61) and the wavelength transformation portion (62) are connected seamlessly to each other. The power supply module (5) is disposed inside the cap (1) and electrically connected to the LED module (4) and the cap (1).

## Description

### BACKGROUND OF THE INVENTION

### 1. Field of the Invention

The instant disclosure relates to a light bulb; in particular, to an LED light bulb.

### 2. Description of Related Art

Modem LEDs (Light Emitting Diodes) can have a color spectrum having various peak wavelengths. For example, a white LED can be made by combining three colored LEDs (such as red, green, and blue). However, when the white LED illuminates, the light intensity may not be uniform around the LED.

To address the above issue, Nichia Corp. introduced a blue LED encapsulated by a phosphor-containing epoxy resin to produce a white LED. Other manufacturer such as Philips Electronics has proposed a blue LED with a phosphor coating. Thus, light emitted from the LED can be a broadband light (e.g., white light) instead of a narrowband light.

However, by using phosphor with the LED, the useful life of the LED would depend greatly on the quality of the phosphor. That is, in order to have an extended service life, phosphor of high quality must be used. Thus, the manufacturing cost of the white LED is raised.

Therefore, if the above white LED is used to manufacture the light bulbs, the manufacturing cost of the light bulb would be difficult to reduce. Hence, such light bulbs would be less suitable for use in low-cost applications.

To address the above issues, the inventors strive via industrial experience and academic research to present the instant disclosure, which can effectively improve the limitations described above.

### SUMMARY OF THE INVENTION

The object of the instant disclosure is to provide an LED light bulb. The LED light bulb has an optical element, which provides a wavelength transformation portion, such that the bandwidth of the light emitted from the LED light bulb is different from the bandwidth of the light emitted from the internal LED lighting module.

An embodiment of the instant disclosure provides an LED light bulb, which comprises a cap, a glass bulb, an LED module, an optical element, and a power supply module. The glass bulb is disposed on one end of the cap, where an accommodating space is defined cooperatively by the glass bulb and the cap. The LED module is used for emitting a first light having a first bandwidth and is disposed in the accommodating space. The optical element is used for guiding the first light emitted from the LED module, where the optical element is disposed in the accommodating space and in the light emission path of the LED module. The optical element has a light guiding portion and a wavelength transformation portion used for converting the first light having the first bandwidth to a second light having a second bandwidth. The light guiding portion and the wavelength transformation portion are connected seamlessly to each other. The power supply module is disposed inside the cap and electrically connected to the LED module and the cap.

Ideally, the wavelength transformation portion is arranged on the outer part of the light guiding portion.

Ideally, the wavelength transformation portion is arranged on one end surface of the optical element adjacent to the LED module.

Ideally, the wavelength transformation portion surrounds the light guiding portion.

Ideally, the light guiding portion is divided into a first sub-portion and a second sub-portion. The wavelength transformation portion is layer-shaped having a given thickness, where the wavelength transformation portion is sandwiched between the first and second sub-portions seamlessly. The first sub-portion is arranged at one side of the wavelength transformation portion facing toward the LED module. Whereas the second sub-portion is arranged at the opposite side of the wavelength transformation portion away from the LED module.

Ideally, the optical element extends in a direction away from the LED module in forming a pillar-like neck portion and a ball-shaped head portion.

Ideally, the light guiding portion of the neck portion is divided into a first sub-portion and a second sub-portion. The wavelength transformation portion is layer-shaped having a given thickness, where the wavelength transformation portion is sandwiched between the first and second sub-portions seamlessly. The first sub-portion is arranged at one side of the wavelength transformation portion facing toward the LED module. Whereas the second sub-portion is arranged at the opposite side of the wavelength transformation portion away from the LED module.

Ideally, the wavelength transformation portion is perpendicular to the axial direction of the optical element.

Ideally, the optical element is spaced apart from one side of the LED module. The second bandwidth is broader than the first bandwidth.

Ideally, the wavelength transformation portion has a plurality of fluorescent particles. These fluorescent particles are made of phosphor, scintillator, or both.

Based on the above, without using the LED that emits a light having the second bandwidth, the LED light bulb can emit a light having the second bandwidth through the optical element having the wavelength transformation portion.

In order to further appreciate the characteristics and technical contents of the instant disclosure, references are hereunder made to the detailed descriptions and appended drawings in connection with the instant disclosure. However, the appended drawings are merely shown for exemplary purposes, rather than being used to restrict the scope of the instant disclosure.

### BRIEF DESCRIPTION OF THE DRAWINGS

Fig. 1 shows a schematic view of a LED light bulb of the instant disclosure;

Fig. 2 shows a perspective view of the LED light bulb of the instant disclosure;

Fig. 3 shows a schematic view of an optical element of the LED light bulb of the instant disclosure;

Fig. 3A shows a partial enlarged view of a portion "A" of the optical element in Fig. 3;

Fig. 4 shows a schematic view of another optical element of the LED light bulb of the instant disclosure;

Fig. 5 shows a schematic view of yet another optical element of the LED light bulb of the instant disclosure;

Fig. 6 shows a schematic view of still another optical element of the LED light bulb of the instant disclosure; and

Fig. 7 shows a schematic view of further still another optical element of the LED light bulb of the instant disclosure.

### DETAILED DESCRIPTION OF THE PREFERRED EMBODIMENTS

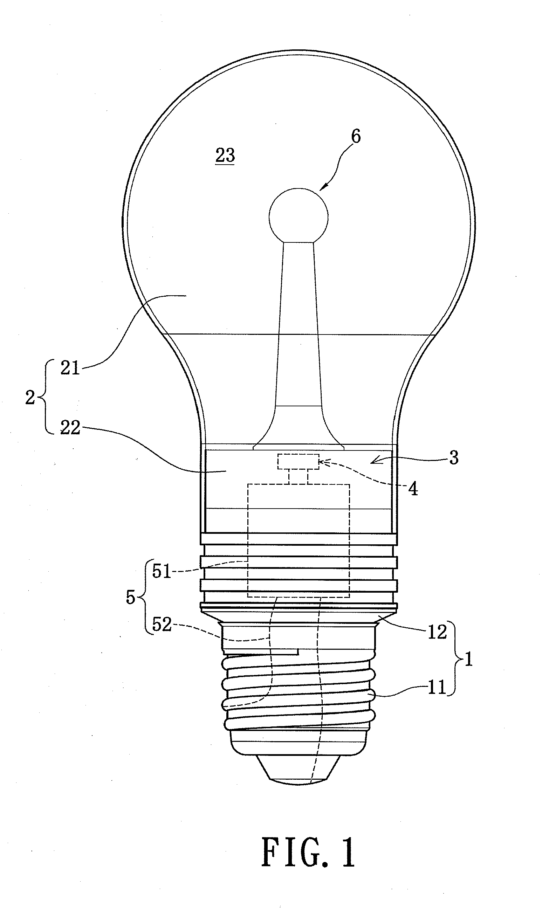

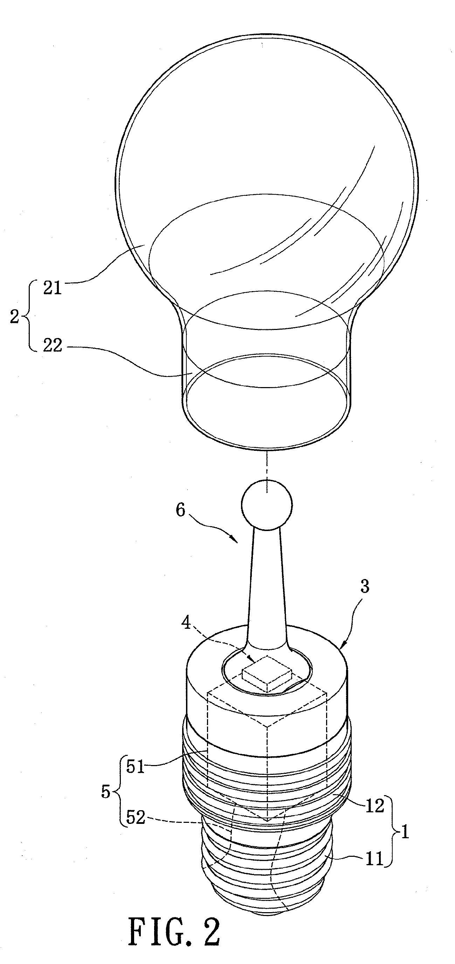

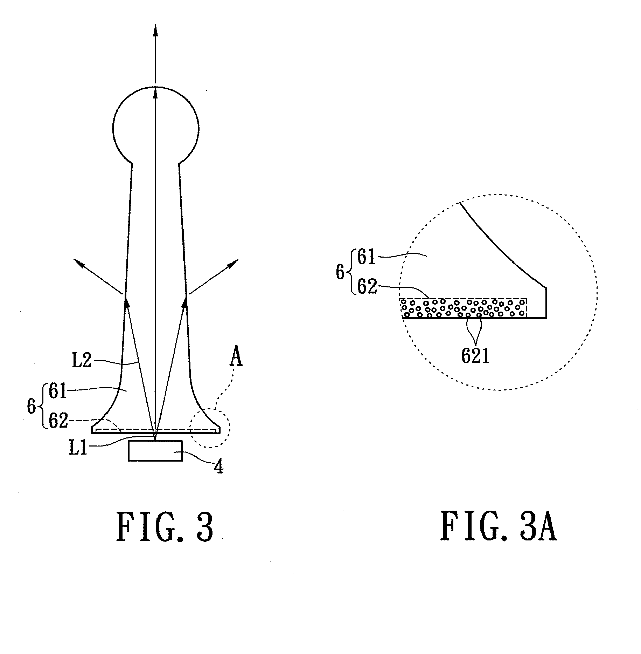

Please refer to Figs. 1 ∼ 7, which show an LED light bulb and its optical element of the instant disclosure. Specifically, Figs. 1 and 2 show the schematic views of the LED light bulb. Whereas Figs. 3 ∼ 7 show different types of optical elements used by the LED light bulb.

As shown in Figs. 1 and 2, the LED light bulb of the instant disclosure comprises a cap 1, a glass bulb 2 disposed on one end of the cap 1, a heat sink 3 disposed on the cap 1, an LED module 4 disposed on the heat sink 3, a power supply module 5 disposed inside the cap 1 and electrically connected to the LED module 4 and the cap 1, and an optical element 6 used for guiding the light emitted from the LED module 4.

The cap 1 has a threaded mounting portion 11 and a connecting portion 12 extended therefrom. The mounting portion 11 is used for screwing to a matching socket (not shown), such that the LED light bulb is electrically connected to a power source (not shown). The cross-sectional surface of the connecting portion 12 is greater than the cross-sectional surface of the mounting portion 11. When the mounting portion 11 is mated to the socket, the connecting portion 12 is rested against the socket.

The glass bulb 2 can be transparent, matted, or have other light-permitting surfaces. The glass bulb 2 has a main portion 21 and an extended portion 22 extending therefrom. The main portion 21 of the glass bulb 2 is a hollow and spherical member, and the extended portion 22 is annular shaped. However, when in use, the shape of the glass bulb 2 is not limited thereto.

The extended portion 22 of the glass bulb 2 is disposed on one end of the cap 1 (i.e., the connecting portion 12). An accommodating space 23 is cooperatively defined by the glass bulb 2 and the cap 1. However, the shape and the connecting method of the glass bulb 2 and the cap 1 is not restricted to the exemplary embodiment, but can be changed according to the designer. For example, the extended portion 22 of the glass bulb 2 and the connecting portion 12 of the cap 1 can have matching threads or engaging structures (not shown) for mating to each other.

The heat sink 3 is constructed of thermally conductive metal (such as aluminum), ceramics (such as alumina or aluminum nitride), or thermally conductive plastics. The heat sink 3 can be a hollow or solid structure, but is not limited thereto. In this embodiment, the heat sink 3 is made by aluminum and is a hollow structure in order to increase the heat dissipating efficiency.

In addition, based on the operational requirement, the outer surface of the heat sink 3 can be coated with a nano-structured layer for thermal radiation in forming a radiation layer (not shown). Thus, the heat dissipating efficiency can be enhanced.

The heat sink 3 is disposed inside the accommodating space 23 and on one end of the connecting portion 12. The LED module 4 is also disposed in the accommodating space 23 and on the heat sink 3. The LED module 4 is used for emitting a first light L1 having a first bandwidth toward the main portion 21 of the glass bulb 2.

The LED module 4 has at least one LED. If multiple LEDs are provided, the LEDs are arranged in an array. However, the exact configuration of the LED module 4 can be changed according to the operational requirement or practical needs. For example, a shell type LED module or an LED module constructed by the surface mounting technology (SMT) method may be used.

The power supply module 5 is electrically connected to the LED module 4 and the inner edge of the mounting portion 11 of the cap 1 to achieve electrical connection with an external power source. For example, the power supply module 5 has a driver 51 and two wires 52. One end of each wire 52 is electrically connected to the driver 51, where the drive 51 is electrically connected to the LED module 4. Meanwhile, the opposite end of one of the wires 52 is electrically connected to the bottom end of the mounting portion 11, while the opposite end of the other wire 52 is electrically connected to the inner side surface of the mounting portion 11. Thus, electrical connection is established between the LED light bulb and the external power source.

The optical element 6, used for guiding the first light L1, is disposed in the accommodating space 23 and in the light emission path of the LED module 4. The optical element 6 extends in a direction away from the LED module 4 to form a pillar-like neck portion and a ball-shaped head portion. However, when in use, the shape of the optical element 6 is not limited thereto.

The optical element 6 has a light guiding portion 61 and a wavelength transformation portion 62. The light guiding portion 61 and the wavelength transformation portion 62 are connected seamlessly to each other, that is to say, the light guiding portion 61 and the wavelength transformation portion 62 are a one-piece structure. The light guiding portion 61 is used for transmitting light (e.g., the first light L1 or a second light L2 having a second bandwidth). The wavelength transformation portion 62 is used for converting the first light L1, which passes through the wavelength transformation portion 62 and having the first bandwidth, to the second light L2 that has the second bandwidth.

The main spirit of the instant disclosure is this: the light guiding portion 61 and the wavelength transformation portion 62 are connected seamlessly to each other, and after the first light L1 having the first bandwidth is converted to the second light L2 having the second bandwidth via the wavelength transformation portion 62, the LED light bulb will emit the second light L2. Of the seamless connection between the light guiding portion 61 and the wavelength transformation portion 62, several possible arrangements are described hereinbelow, but not limited thereto.

The first type of optical element is shown in Fig. 3. The wavelength transformation portion 62 is arranged on the end surface of the light guiding portion 61 adjacent to the LED module 4. In other words, the wavelength transformation portion 62 is located at the bottom of the pillar-like neck portion of the optical element 6. Thus, the first light L1 having the first bandwidth emitted from the LED module 4 initially passes through the wavelength transformation portion 62 and is converted to the second light L2 having the second bandwidth, before entering the light guiding portion 61.

In more detail, please refer to Fig. 3A, which shows a partial enlarged view of the wavelength transformation portion 62. The wavelength transformation portion 62 has a plurality of fluorescent particles 621, where the fluorescent particles 621 are made up of phosphorous particles, scintillators, or both. Accordingly, the first light L1 having the first bandwidth is converted to the second light L2 having the second bandwidth via these fluorescent particles 621 of the wavelength transformation portion 62. However, the method of transformation is not restricted thereto.

The instant embodiment is described by the first type of wavelength transformation portion 62 having the fluorescent particles 621. Other types of the wavelength transformation portions 62 to be described hereinbelow also include the fluorescent particles 621,

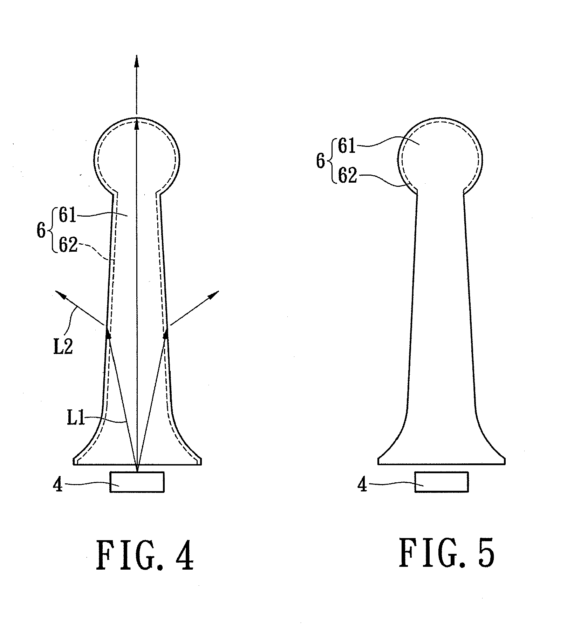

A second type of optical element 6 is shown in Fig. 4, where the wavelength transformation portion 62 is arranged around the light guiding portion 61. In other words, the wavelength transformation portion 62 is located on the outer part of the neck and head portions of the optical element 6. Thus, the first light L1 having the first bandwidth emitted from the LED module 4 initially enters the light guiding portion 61, followed by passing through the wavelength transformation portion 62 for converting to the second light L2 having the second bandwidth to emit out of the optical element 6.

Alternatively, a third type of optical element 6 can be derived as shown in Fig. 5, where the wavelength transformation portion 62 is arranged around the light guiding portion 61 of the head portion. In other words, the wavelength transformation portion 62 is located at the outer part of the head portion of the optical element 6. Thus, the LED light bulb will substantially emit the second light L2 having the second bandwidth.

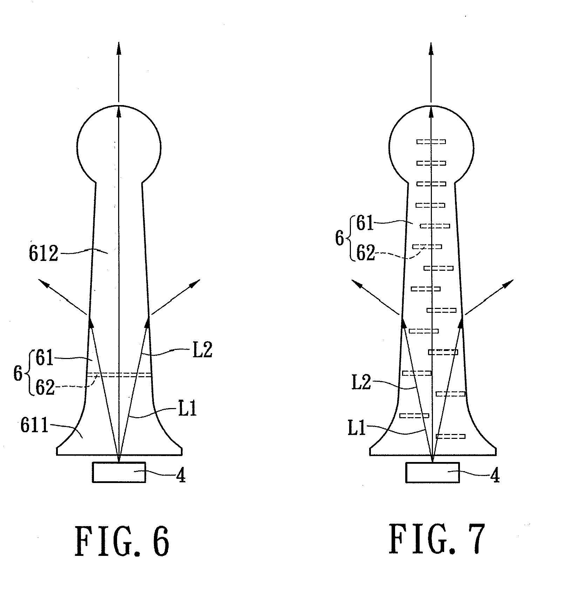

A fourth type of optical element 6 is presented in Fig. 6, where the light guiding portion 61 is divided into a first sub-portion 611 and a second sub-portion 612 by the wavelength transformation portion 62.

In particular, the wavelength transformation portion 62 is layer-shaped and sandwiched seamlessly between the first and second sub-portions 611, 612. The first sub-portion 611 is arranged at one side of the wavelength transformation portion 62 adj acent to the LED module 4, and the second sub-portion 612 is arranged at the opposite side of the wavelength transformation portion 62 away from the LED module 4. Moreover, the wavelength transformation portion 62 is perpendicular to the axial direction of the optical element 6, but is not limited thereto.

Thus, the first light L1 having the first bandwidth emitted from the LED module 4 initially enters the first sub-portion 611 of the light guiding portion 61. As the first light L1 leaves the first sub-portion 611 and enters into the second sub-portion 612, the first light L1 is converted to the second light L2 having the second bandwidth via the wavelength transformation portion 62.

Alternatively, a fifth type of optical element 6 can be derived as shown in Fig. 7, where the wavelength transformation portion 62 is defined by a plurality of sub-regions embedded inside the light guiding portion 61. The exact shape that characterize each sub-region is not limited to the ones shown in the figure.

In this embodiment, the first light L1 has a narrow bandwidth (e.g., blue light), and the second light L2 has a broad bandwidth (e.g., white light). That is to say, the second light L2 has a broader bandwidth than the first light L1, but is not restricted thereto Moreover, for the instant disclosure, the optical element 6 is spaced apart from one side of the LED module 4. However, when in use, the optical element 6 can be abutted to the LED module 4 (not shown).

For advantages of the instant disclosure, without using the white LED module, the LED light bulb can emit white light through the optical element 6 having the wavelength transformation portion 62.

Additionally, the service life of the LED light bulb is not closely related to the quality of the fluorescent particles 621 of the wavelength transformation portion 62. That is, the LED light bulb of the instant disclosure can use non-white LED and need not to use high-grade fluorescent particles to reduce the manufacturing cost of the LED light bulb for emitting white light.

The descriptions illustrated supra set forth simply the preferred embodiments of the instant disclosure; however, the characteristics of the instant disclosure are by no means restricted thereto. All changes, alternations, or modifications conveniently considered by those skilled in the art are deemed to be encompassed within the scope of the instant disclosure delineated by the following claims.

## Claims

1. An LED light bulb, comprising
a cap (1);
a glass bulb (2) disposed on one end of the cap (1) and cooperatively defining an accommodating space (23);
an LED module (4) for emitting a first light (L1) having a first bandwidth and received inside the accommodating space (23);
an optical element (6) for guiding the first light (L1) and received inside the accommodating space (23) and located at a light path of the LED module (4), wherein the optical element (6) has a light guiding portion (61) and a wavelength transformation portion (62) for converting the first light (L1) to a second light (L2) having a second bandwidth, wherein the light guiding portion (61) and the wavelength transformation portion (62) are connected seamlessly to each other; and
a power supply module (5) disposed inside the cap (1) and electrically connected to the LED module (4) and the cap (1).

2. The LED light bulb as claimed in claim 1, wherein the wavelength transformation portion (62) is arranged on the outer part of the light guiding portion (61).

3. The LED light bulb as claimed in claim 1, wherein the wavelength transformation portion (62) is arranged on one end of the light guiding portion (61) adjacent to the LED module (4).

4. The LED light bulb as claimed in claim 1, wherein the wavelength transformation portion (62) surrounds the light guiding portion (61).

5. The LED light bulb as claimed in claim 1, wherein the light guiding portion (61) is divided into a first sub-portion (611) and a second sub-portion (612), wherein the wavelength transformation portion (62) is layer-shaped and sandwiched between the first and second sub-portions (611, 612) seamlessly, wherein the first sub-portion (611) is arranged at one side of the wavelength transformation portion (62) adjacent to the LED module (4), and wherein the second sub-portion (612) is arranged at the opposite side of the wavelength transformation portion (62) away from the LED module (4).

6. The LED light bulb as claimed in claim 1, wherein the optical element (6) extends in a direction away from the LED module (4) in forming a pillar-shaped neck portion and a ball-shaped head portion.

7. The LED light bulb as claimed in claim 6, wherein the neck portion of the optical element (6) is divided into a first sub-portion (611) and a second sub-portion (612), wherein the wavelength transformation portion (62) is layer-shaped and sandwiched between the first and second sub-portions (611, 612) seamlessly, wherein the first sub-portion (611) is arranged at one side of the wavelength transformation portion (62) adjacent to the LED module (4), and wherein the second sub-portion (612) is arranged at the other side of the wavelength transformation portion (62) away from the LED module (4).

8. The LED light bulb as claimed in claim 7, wherein the wavelength transformation portion (62) is perpendicular to an axial direction of the optical element (6).

9. The LED light bulb as claimed in claim 1, wherein the optical element (6) is spaced apart from one side of the LED module (4), and wherein the second light (L2) has a greater bandwidth than the first light (L1).

10. The LED light bulb as claimed in claim 1, wherein the wavelength transformation portion (62) has a plurality of fluorescent particles (621), wherein the fluorescent particles (621) is made up of phosphorous particles, scintillators, or both.
